Europäisches Patentamt

(19) **European Patent Office**

Office européen des brevets

(11) Numéro de publication : **0 161 274**
**B1**

(12) **FASCICULE DE BREVET EUROPÉEN**

(45) Date de publication du fascicule du brevet :
**19.07.89**

(51) Int. Cl.⁴ : **F 16 K 7/06**

(21) Numéro de dépôt : **84903945.8**

(22) Date de dépôt : **02.11.84**

(86) Numéro de dépôt international :
**PCT/CH 84/00175**

(87) Numéro de publication internationale :
**WO/8502000 (09.05.85 Gazette 85/11)**

(54) **DISPOSITIF D'OUVERTURE ET DE FERMETURE DE L'ECOULEMENT D'UN FLUIDE COMPRENANT UN ELEMENT TUBULAIRE EN FORME DE S.**

(30) Priorité : **02.11.83 CH 5906/83**

(43) Date de publication de la demande :
**21.11.85 Bulletin 85/47**

(45) Mention de la délivrance du brevet :
**19.07.89 Bulletin 89/29**

(84) Etats contractants désignés :
**DE FR GB NL**

(56) Documents cités :
**DE–B– 1 077 932**
**DE–C– 30 527**
**DE–C– 36 527**
**FR–A– 1 069 913**
**FR–A– 1 166 745**
**FR–A– 2 176 605**
**FR–A– 2 346 761**
**US–A– 1 336 891**
**US–A– 2 995 334**
**US–A– 3 100 486**

(73) Titulaire : **MICHIELIN, Serge**
**avenue des Alpes 120**
**CH-1814 La Tour-de-Peilz (CH)**

**NYDEGGER, Roland**
**Sierenzerstrasse 9**
**CH-4055 Basel (CH)**

(72) Inventeur : **MICHIELIN, Serge**
**avenue des Alpes 120**
**CH-1814 La Tour-de-Peilz (CH)**
Inventeur : **NYDEGGER, Roland**
**Sierenzerstrasse 9**
**CH-4055 Basel (CH)**

(74) Mandataire : **Rochat, Daniel Jean et al**
**Bovard SA Ingénieurs-conseils ACP Optingenstrasse 16**
**CH-3000 Bern 25 (CH)**

## Description

La présente invention a pour objet un dispositif d'ouverture et de fermeture de l'écoulement d'un fluide comportant un élément tubulaire en un matériau déformable susceptible de prendre à l'état fermé une forme en S avec trois segments rectilignes successifs reliés par des coudes qui obturent l'écoulement par aplatissement local de l'élément.

Elle concerne également une outre-récipient pourvue du dispositif d'ouverture et de fermeture.

On connaît déjà notamment par le fascicule de brevet FR-1 166 745 un dispositif d'ouverture et de fermeture de l'écoulement d'un fluide du genre spécifié ci-dessus. Ce dispositif connu, destiné à la commande facile et immédiate de l'écoulement du sang dans un appareillage de perfusion ou de transfusion exige un effort manuel pour l'ouverture et pour la fermeture, l'élément tubulaire souple étant rigidifié par un fil métallique. ·

On rencontre toutefois dans d'autres domaines encore le besoin de pouvoir enclencher et interrompre de manière immédiate et facile l'écoulement d'une matière contenue dans un emballage ou dans un appareillage, en évitant les complications et inconvénients des dispositifs traditionnels comportant des robinets ou vannes.

Le but de la présente invention est de satisfaire mieux que jusqu'à maintenant ce besoin de la technique.

Dans ce but, le dispositif selon l'invention est caractérisé en ce que l'élément tubulaire est constitué d'un matériau thermoplastique élastique, en ce que sa paroi présente à l'intérieur des coudes des points de soudure permettant de maintenir le dispositif à l'état fermé en l'absence d'effort extérieur exercé sur l'élément tubulaire, et en ce que l'élasticité et la déformabilité du matériau sont suffisantes pour assurer l'ouverture du dispositif par alignement des segments rectilignes sous l'effet d'une traction exercée sur le segment rectiligne extrême et pour le ramener à l'état fermé en l'absence de cette traction.

On va décrire ci-après, en se référant au dessin annexé, diverses formes d'exécution du dispositif d'ouverture et de fermeture, et d'une outre-récipient pourvue de ce dispositif :

les fig. 1A, 1B et 1C sont des vues en élévation d'une première forme d'exécution, dans trois positions différentes,

les fig. 2A et 2B sont des vues explicatives de cette première forme d'exécution désignant les éléments essentiels et expliquant leur fonction,

les fig. 3A et 3B représentent une outre-récipient avec une deuxième forme d'exécution du dispositif,

les fig. 4A et 4B montrent une autre utilisation du dispositif selon la deuxième forme d'exécution,

la fig. 5 montre diverses variantes de l'élément tubulaire,

les fig. 6A, 6B, 7A, 7B montrent différents éléments accessoires utilisables avec le dispositif et solidaires de l'outre-récipient,

les fig. 8, 9 et 10 sont des vues en élévation de trois formes d'exécution d'une outre-récipient selon l'invention et

les fig. 11A, 11B, 11C et 11D sont des vues partielles et schématiques illustrant des détails de réalisation.

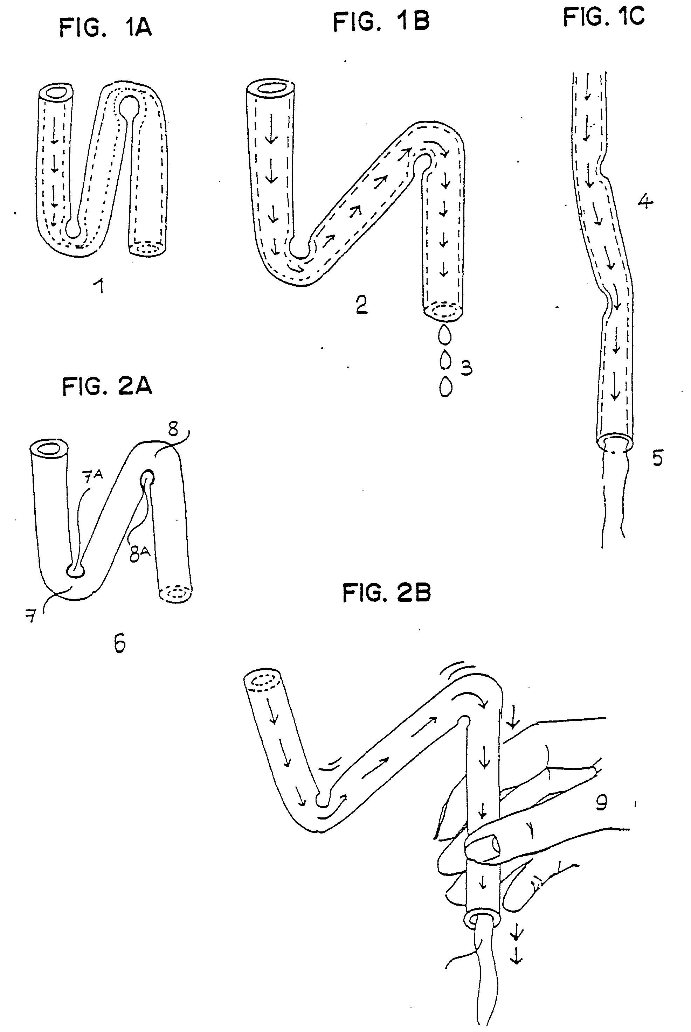

Sur les figures 1A, 1B, 1C, l'élément d'ouverture et de fermeture d'écoulement d'un fluide se trouve présenté fermé 1 en forme de S, position dans laquelle il reste s'il n'y a pas traction extérieure quelconque ; semi-ouvert 2, position dans laquelle un fluide coule lentement, éventuellement au goutte à goutte 3 ; totalement ouvert 4, position dans laquelle tout fluide coule en un débit rapide 5.

Sur les figures 2A et 2B, l'élément d'ouverture et de fermeture d'écoulement d'un fluide se trouve présenté plié 6 avec ses deux coudages 7 et 8 qui indiquent les emplacements des points de soudure 7A et 8A afin que l'élément conserve sa forme en S, selon les matériaux utilisés.

Sur la fig. 2B, la main 9 fait traction vers le bas pour assurer l'écoulement du fluide.

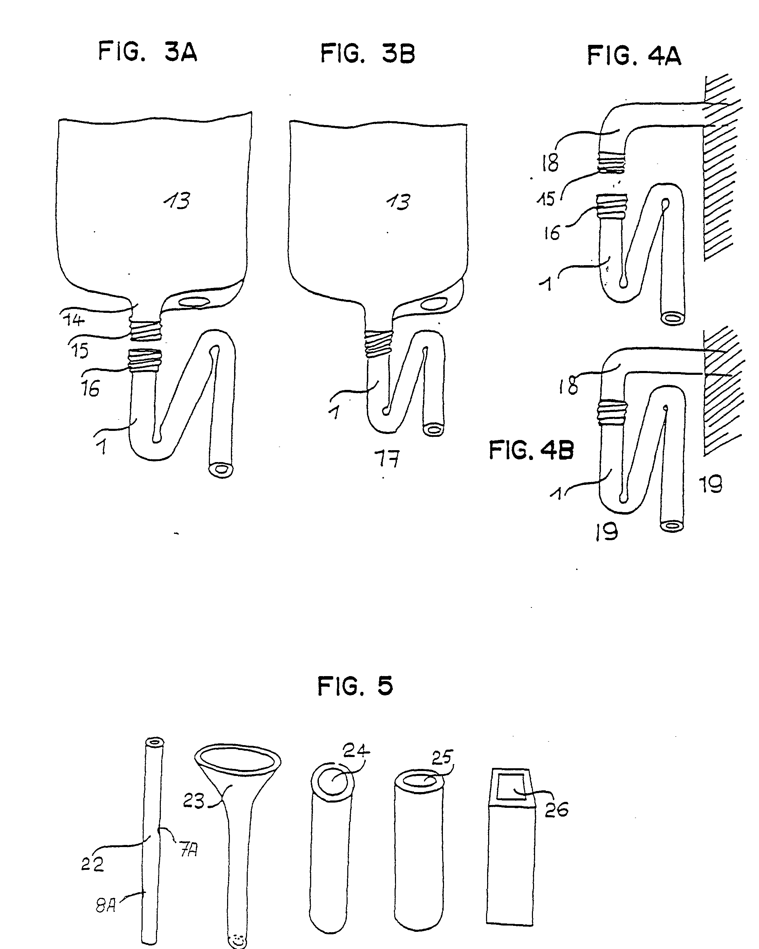

Sur les figures 3A et 3B, on voit un conteneur 13 de fluide possédant à son ouverture 14, par exemple, un pas de vis 15 avec au-dessous l'élément 1 de la présente invention qui possède également un pas de vis 16 appelé à être fixé sur le conteneur 13 afin d'y former l'ensemble 17 composé de la pièce 13 et de l'élément 1 ; toute autre méthode de fixation connue étant également utilisable. On voit aussi sur les figures 4A et 4B un appareillage « fontaine » fixe et/ou mobile 18 pouvant accepter le même principe que celui numéroté 1, 13 et 17 pour former l'ensemble 19.

Sur la figure 5, l'élément d'ouverture et de fermeture d'écoulement d'un fluide 1 peut être droit 22, évasé 23, rond 24, ovale 25 ou carré 26, etc., ceci en fonction des fluides devant transiter à travers ledit élément ; la longueur peut être variable en fonction de l'utilisation. Les points de soudure 7A, 8A sont également visibles sur l'élément 22.

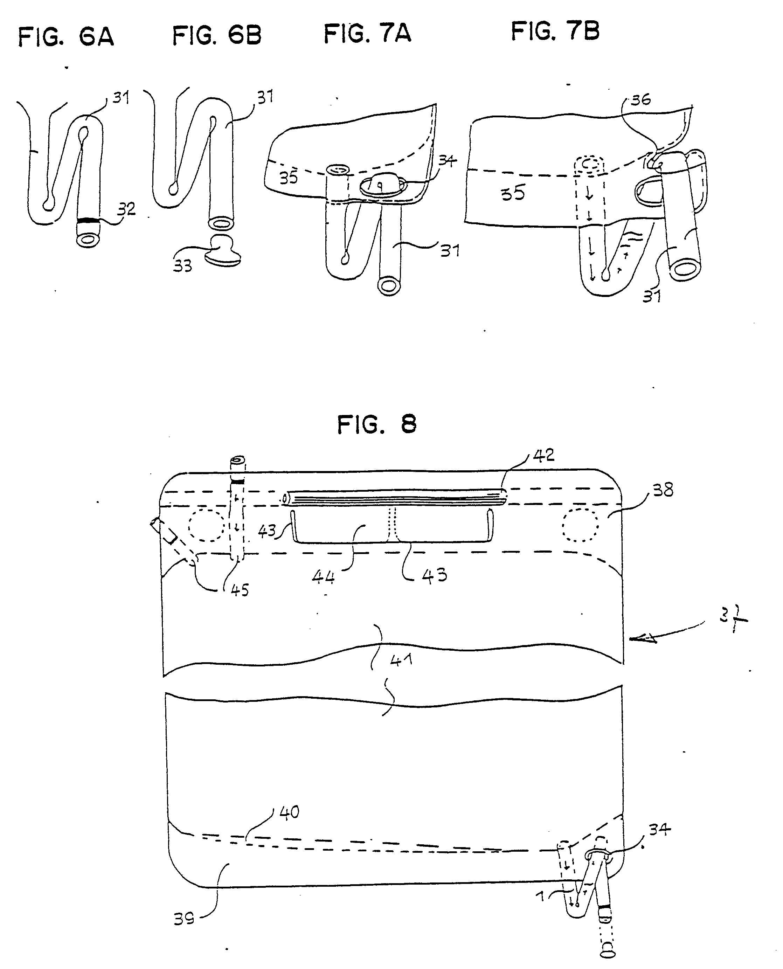

Sur les figures 6A et 6B, pour des raisons de manutentions-transports-stockage, etc., l'élément d'ouverture et de fermeture d'écoulement d'un fluide 31 peut disposer d'une soudure 32 qui se coupera lors de l'utilisation du fluide ; ledit élément 31 peut également disposer d'un bouchon 33 temporaire pour les mêmes raisons. Selon les figures 7A et 7B, l'élément 31 peut également être inséré dans un trou 34 de toute forme effectué dans le conteneur 35. Lors de manutentions répétées sur le même lieu d'utilisation, le conteneur 35 peut disposer d'une encoche 36 où l'élément 31 sera posé.

Sur la figure 8, on voit un exemple d'outre-conteneur 37 thermoplastique en totalité, selon une formule de fabrication possible ; on y trouve la masse soudée 38 du haut de l'outre d'une hauteur d'environ cinq centimètres ainsi que la masse soudée 39 du bas de l'outre d'une hauteur d'environ trois centimètres pouvant être parfois inclinée 40 en fonction du fluide contenu à l'intérieur ; la cavité réceptrice de fluide 41 est une poche qui n'a pas de limites définies dans sa largeur et sa hauteur mais, prise dans le présent exemple, pour environ 28 centimètres de large et 40 centimètres de haut, la cavité réceptrice 41 comme montrée sur la figure 8 est apte à supporter une charge de plus de 60 kilos. Le système porteur indiqué montre la poignée 42 du haut faite d'une matière synthétique ou autre (bois, alu, etc.), ladite aura au minimum une longueur correspondante à la largeur d'une main adulte et elle sera noyée dans la masse soudée 38, une découpe 43 en forme de U évasé est effectuée afin de créer une languette 44 qui sert de masse protectrice lors du portage de l'outre. Sur la présente figure, on voit l'élément 1 de la figure 1 pris dans le trou 34 de la figure 7 ci-avant. La valve 45 d'adjonction se trouve également en partie noyée dans la masse 38, cette valve est conçue soit pour ajouter — après soudage de l'outre - des matières comme azote, gaz, vitamines, etc, soit pour aspirer l'air en vue d'y créer un effet vacuum et ainsi, éventuellement, effectuer un remplissage sous vide.

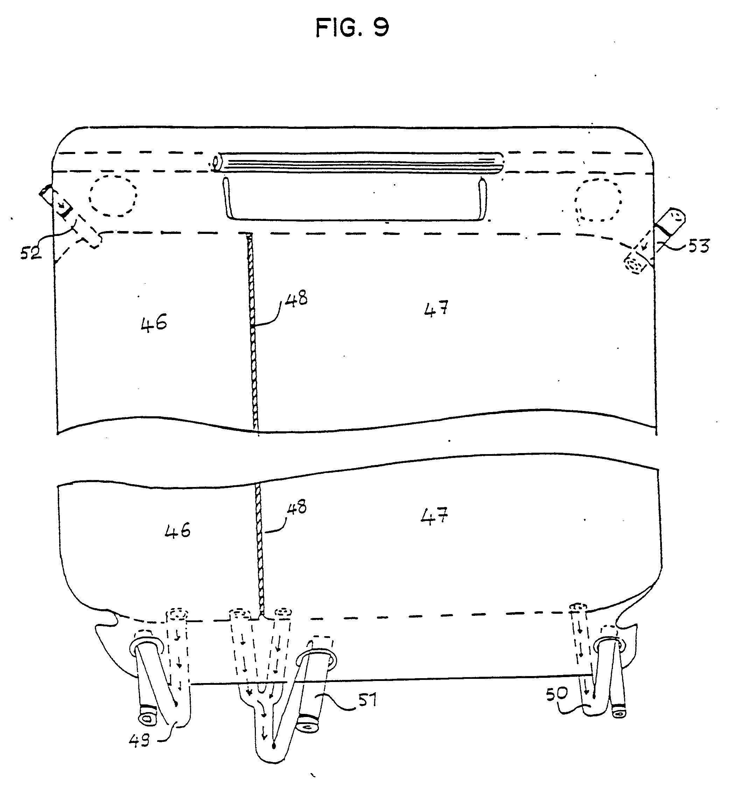

Sur la figure 9, l'outre est composée de deux poches 46 et 47 réceptrices de fluides ou corps, contenant chacune un fluide ou un corps différent, la séparation 48 est procédée par thermosoudage et son épaisseur peut être variable en fonction des produits contenus dans les poches 46 et 47 ; on constate que la poche 46 peut disposer de son élément 49 d'ouverture et de fermeture d'écoulement ainsi que la poche 47 son élément 50, et, l'élément 51 peut remplacer ou compléter les éléments 49 et 50 selon les besoins. Sa forme peut être variable sans pour autant changer le principe de l'invention de l'élément. Les valves 52 et 53 peuvent être soudées dans l'outre s'il y a nécessité selon les fluides contenus dans les poches 46 et 47.

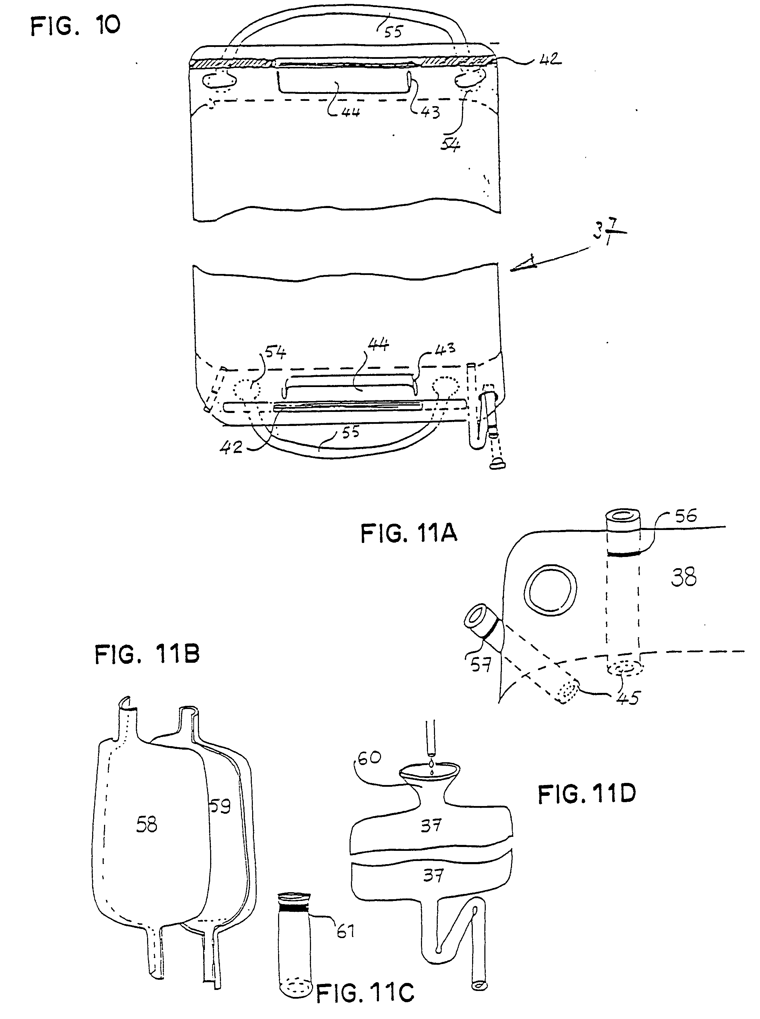

Sur la figure 10, l'on peut voir le système porteur dans sa totalité, on constate qu'il peut être sur le haut de l'outre 37 décrite sur la figure 8 ainsi que sur le bas comme indiqué sur la présente figure ; les éléments indiqués sur la figure 8 soit la poignée 42, la découpe 43 et la languette 44 en font partie et, de plus, l'on constate la présence des trous 54 et d'une courroie porteuse 55. Le système porteur se trouve généralement sur le haut de l'outre, il peut toutefois se trouver sur le bas de l'outre en fonction d'exécutions spéciales ; lors de grande contenance dans l'outre, le système porteur peut se trouver sur le haut et sur le bas de l'outre pour alléger la charge lors du transport et de la manutention. Les trous 54 ne servent pas uniquement à la courroie 55 mais sont également prévus pour être fixés sur une potence.

Sur les figures 11A, 11B, 11C et 11D, on voit la valve 45 d'adjonction décrite sur la figure 8 qui peut être totalement ou partiellement noyée dans la masse 38 ; on voit également la soudure 56 de la valve prise dans la masse 38. Cette soudure peut également être à l'extérieur comme en 57. La valve 45 peut être le prolongement direct de l'outre 37, prolongement effectué lors d'une extrusion ou d'un assemblage de deux faces 58 et 59 pour constituer l'outre 37. Ladite valve 45 a plusieurs fonctions, elle permet un remplissage de l'outre dans sa forme présentée ou dans une exécution plus évasée 60 selon la densité du fluide ainsi que de l'écoulement dudit, exemple : un alcool en sortie de distilleuse. Elle permet également une succion-aspiration après remplissage afin d'y créer un effet vaccum pour chasser l'air pouvant éventuellement rester dans l'outre, la soudure s'effectuera après la succion.

La valve 45 permet une injection de substances avant remplissage de l'outre si nécessaire ainsi qu'une injection de matières complémentaires avant utilisation si nécessaire. La valve 45 peut être un simple tuyau 61 soudé en sa partie externe si sa fonction n'est utile qu'au remplissage. La valve peut être de forme variable comme, par exemple, droite, ronde, évasée, ovale ou carrée, etc., ceci en fonction des fluides dans le récipient.

Le dispositif décrit plus haut permet uniquement par la forme coudée en S de l'élément tubulaire un écoulement instantané ainsi qu'un arrêt instantané de l'écoulement sans nécessiter aucun mécanisme et sans utiliser de bouchon, pas de vis, etc. Il permet de commander des écoulements de produits très variés, alimentaires ou non, notamment des produits volatils, corrosifs ou des produits dispersables. Dans le cas, notamment de produits très dispersables dans l'air, par exemple, lors de la manutention de certaines poudres, le dispositif réduit presque totalement cette dispersion. De plus, le dispositif, grâce au fait qu'il est entièrement constitué d'un élément tubulaire en matériau thermoplastique élastique, peut être fabriqué d'une pièce avec l'emballage contenant le produit. Il n'est pas impératif de lui adjoindre un bouchon de sécurité, ce qui simplifie les opérations de fabrication.

La facilité de remplissage, la possibilité de conserver les produits à l'abri de l'air et la conservation de la protection contre l'air ambiant au cours de l'extraction du produit sont encore d'autres avantages de l'objet de l'invention.

**Revendications**

1. Dispositif d'ouverture et de fermeture de l'écoulement d'un fluide comportant un élément tubulaire en un matériau déformable susceptible de prendre à l'état fermé une forme en S avec trois segments rectilignes successifs reliés par des coudes (7, 8) qui obturent l'écoulement par aplatissement local de l'élément, caractérisé en ce que l'élément tubulaire est constitué d'un matériau thermoplastique élastique, en ce que sa paroi présente à l'intérieur des coudes des points de soudure (7A, 8A) permettant de maintenir le dispositif à l'état fermé en l'absence d'effort extérieur exercé sur l'élément tubulaire, et en ce que l'élasticité et la déformabilité du matériau sont suffisantes pour assurer l'ouverture du dispositif par alignement des segments rectilignes sous l'effet d'une traction exercée sur le segment rectiligne extrême et pour le ramener à l'état fermé en l'absence de cette traction.

2. Dispositif selon la revendication 1, caractérisé en ce que l'élément tubulaire présente, dans les dits segments rectilignes, une section circulaire, ovale, carrée ou rectangulaire.

3. Dispositif selon la revendication 1, caractérisé en ce que le dit élément tubulaire présente dans sa longueur une section de forme et de dimension constante, ou évasée à une des extrémités.

4. Outre-récipient, caractérisée en ce qu'elle comporte, relié à sa partie inférieure au moins un dispositif selon la revendication 1, et en ce que l'élément tubulaire est relié de moulage ou par soudage ou collage à une ouverture de la paroi de l'outre-récipient située à la partie inférieure de ce dernier.

5. Outre-récipient selon la revendication 4, caractérisée en ce que la cavité réceptrice de fluide est divisée en plusieurs compartiments, et en ce que des dispositifs selon la revendication 1 sont connectés à chacun desdits compartiments.

6. Outre-récipient selon la revendication 4, caractérisée en ce qu'elle comporte des moyens de portage situés sur le haut ou sur le haut et sur le bas.

7. Outre-récipient selon la revendication 4, caractérisée en ce qu'elle présente à sa partie inférieure un moyen d'accrochage de sécurité apte à retenir en position repliée le coude de l'élément tubulaire le plus éloigné de l'extrémité de cet élément qui est reliée à l'outre.

## Claims

1. Opening and closing device for the flow of a fluid comprising a tubular element of a deformable material capable of assuming in the closed state an S shape having three successive straight segments joined by bends (7, 8) which block the flow by local flattening of the element, characterized in that the tubular element is made of a resilient thermoplastic material, in that on the inside of the bends its wall has spot welds (7A, 8A) permitting the device to be kept in the closed state in the absence of outside effort exerted upon the tubular element, and in that the resilience and the deformability of the material are sufficient to ensure the opening of the device by alignment of the straight segments under the influence of traction exerted on the end straight segment and to return it to the closed state in the absence of this traction.

2. Device according to claim 1, characterized in that the tubular element has a circular, oval, square or rectangular cross-section in the said straight segments.

3. Device according to claim 1, characterized in that the said tubular element has along its length a cross-section of constant shape and size, or wide-mouthed at one of the ends.

4. Recipient-waterskin, characterized in that it comprises, joined to its lower part, at least one device according to claim 1, and in that the tubular element is mould-joined or joined by welding or gluing to an opening in the wall of the recipient-waterskin situated in the lower part thereof.

5. Recipient-waterskin according to claim 4, characterized in that the fluid-receiving cavity is divided into several compartments, and in that devices according to claim 1 are connected to each of the said compartments.

6. Recipient-waterskin according to claim 4, characterized in that it comprises carrying means situated at the top or at the top and at the bottom.

7. Recipient-waterskin according to claim 4, characterized in that in that it has at its lower part a safety hooking means suitable for holding in bent-back position the bend of the tubular element the farthest from the end of this element which is joined to the waterskin.

## Patentansprüche

1. Oeffnungs- und Schliessvorrichtung für einen Flüssigkeitsdurchfluss mit einem rohrförmigen Element aus einem verformbaren Material, das fähig ist, im geschlossenen Zustand die Form eines S mit drei aufeinanderfolgenden geraden Segmenten anzunehmen, welche über Krümmungen (7, 8) miteinander verbunden sind, die durch lokales Abflachen des Elementes den Durchfluss verschliessen, dadurch gekennzeichnet, dass das rohrförmige Element aus einem thermoplastischen federnden Material gebildet ist, dass seine Wand auf der Innenseite der Krümmungen Schweissstellen (7A, 8A) aufweist, die gestatten, die Vorrichtung im Schliesszustand zu halten, wenn keine äussere Kraft auf das rohrförmige Element einwirkt und dass die Elastizität und die Deformierbarkeit des Materials ausreichend sind zum Sichern des Oeffnens der Vorrichtung durch Ausrichten der geraden Segmente unter der Wirkung eines auf das äusserste gerade Segment ausgeübten Zuges und zum Zurücksetzen in den Schliesszustand, wenn der genannte Zug nicht mehr wirksam ist.

2. Vorrichtung nach Anspruch 1, dadurch gekennzeichnet, dass die genannten geraden Segmente des rohrförmigen Elementes einen kreisförmigen, ovalen, quadratischen oder rechteckigen Querschnitt aufweisen.

3. Vorrichtung nach Anspruch 1, dadurch gekennzeichnet, dass das genannte rohrförmige Element auf seiner Länge einen Abschnitt mit konstanter Form und Abmessung aufweist oder an einem Ende erweitert ist.

4. Schlauch-Behälter, dadurch gekennzeichnet, dass er wenigstens eine mit seinem Unterteil verbundene Vorrichtung nach Anspruch 1 umfasst und dass das rohrförmige Element durch Angiessen oder Schweissen oder Kleben in einer Oeffnung in der Wand im Unterteil des Schlauch-Behälters angeordnet und mit dem genannten Unterteil verbunden ist.

5. Schlauch-Behälter nach Anspruch 4, dadurch gekennzeichnet, dass der Fluidaufnahmeraum in mehrere Kammern unterteilt ist und dass die Vorrichtungen nach Anspruch 1 mit jeder der genannten Kammern verbunden sind.

6. Schlauch-Behälter nach Anspruch 4, dadurch gekennzeichnet, dass er oben oder oben und unten angeordnete Tragmittel aufweist.

7. Schlauch-Behälter nach Anspruch 4, dadurch gekennzeichnet, dass er an seinem Unterteil ein Sicherheitsaufhängemittel aufweist, das zum Halten der am weitesten vom mit dem Behälter verbundenen Ende des rohrförmigen Elementes entfernten Krümmung des genannten Elementes in der umgebogenen Stellung ausgebildet ist.

FIG. 1A

FIG. 1B

FIG. 1C

FIG. 2A

FIG. 2B

FIG. 3A

FIG. 3B

FIG. 4A

FIG. 4B

FIG. 5

FIG. 6A    FIG. 6B    FIG. 7A    FIG. 7B

FIG. 8

FIG. 9

FIG. 10

FIG. 11A

FIG. 11B

FIG. 11D

FIG. 11C